# EUROPEAN PATENT APPLICATION

(11) **EP 2 634 045 A1**
(43) Date of publication of application: **04.09.2013**
(21) Application number: 11835914.0
(22) Date of filing: 19.07.2011
(51) Int. Cl.: B60R 16/02, G06F 11/00

(54) **PROGRAM REWRITING SYSTEM FOR VEHICLES**

(30) Priority: 29.10.2010 JP 2010242919
(71) Applicant: Honda Motor Co., Ltd., Minato-ku Tokyo 107-8556 (JP)
(72) Inventor: MATSUURA Masanori, Wako-shi Saitama 351-0193 (JP); MIYAMOTO Osamu, deceased (JP); ISHIDA Kenichi, Wako-shi Saitama 351-0193 (JP); WAKITA Kazuyoshi, Wako-shi Saitama 351-0193 (JP)
(74) Representative: Prechtel, Jörg
(86) International application number: PCT/JP2011/066372
(87) International publication number: WO 2012/056773

(57) **Abstract**

A rewriting device (54) of a program rewriting system (10) for vehicles receives a plurality of pieces of rewriting data each including a rewriting program and also receives information of combination suitability determination used for determining whether the combination of the plurality of pieces of rewriting data is suitable or not. The rewriting device (54) then uses the information of combination suitability determination to determine whether the combination of the plurality of pieces of rewriting data is suitable or not. If having determined that the combination is suitable, the rewriting device (54) executes the rewriting of the programs of a plurality of electronic control devices (56a-56d).

## Description

### Technical Field

The present invention relates to a vehicular program rewriting system for rewriting programs for electronic control units.

### Background Art

As computer technology advances, efforts are in progress to computerize vehicles. Computerized vehicles generally incorporate a plurality of electronic control units (ECUs). Control programs, which are used by the ECUs, are rewritten when version upgrades become available. See, U.S. Patent Application Publication No. 2007/0005204 (hereinafter referred to as "US2007/0005204A1") and U.S. Patent Application Publication No. 2008/0133068 (hereinafter referred to as "US2008/0133068A1").

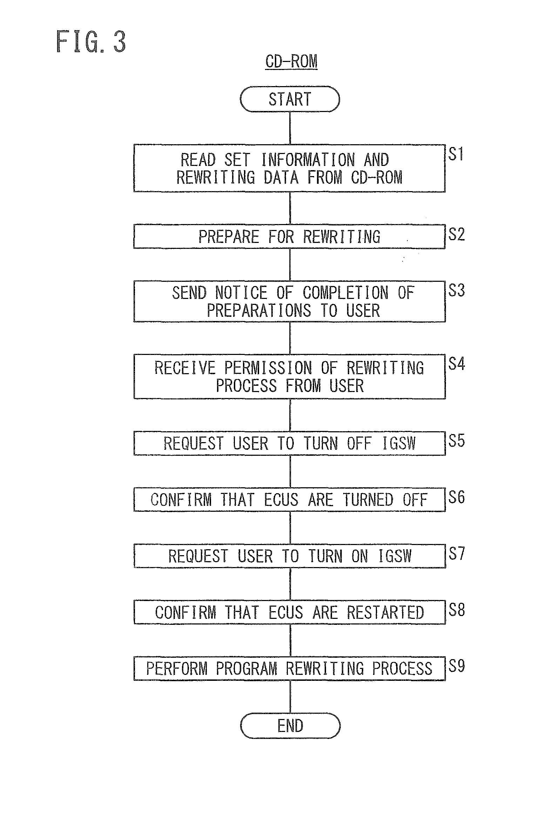

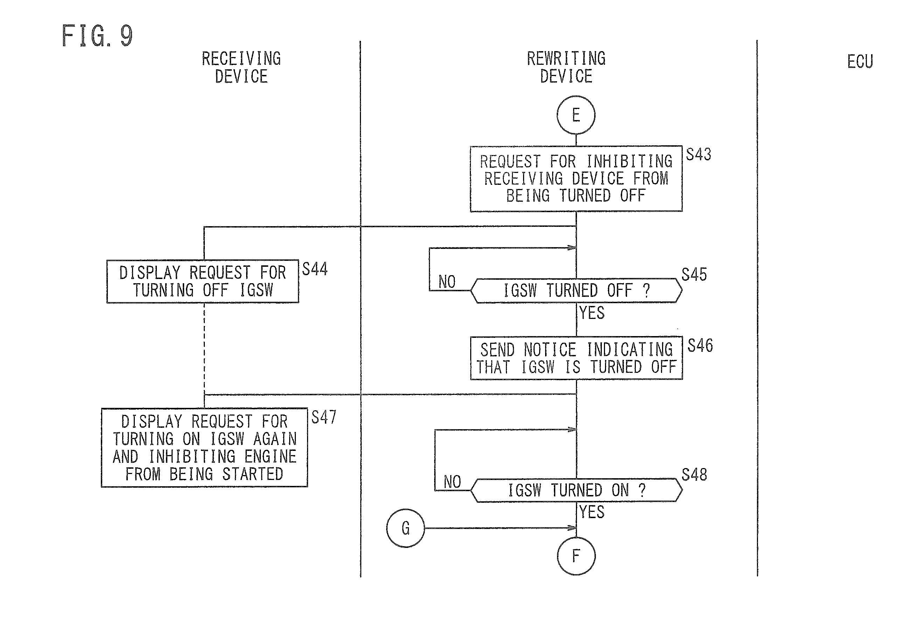

According to US2007/0005204A1, a vehicle-mounted data rewriting device (100) receives rewriting data, which is sent from a management center (200) via a wireless link, and stores the received rewriting data in a memory device (143). Then, the vehicle-mounted data rewriting device receives the rewriting data again from the management center, and compares the received rewriting data with the rewriting data stored in the memory device to judge the appropriateness of the rewriting data stored in the memory device. The vehicle-mounted data rewriting device then notifies the user that preparations for data rewriting have been completed. When the vehicle-mounted data rewriting device receives permission to rewrite data from the user, the vehicle-mounted data rewriting device actually rewrites the data in question (see, paragraph [0069], and FIGS. 3 and 9).

According to US2008/0133068A1, it is proposed to rewrite, efficiently and safely, program data for a plurality of control units, which are connected to a vehicle network (see, paragraphs [0006] and [0007]). More specifically, a first control unit (11) such as a car navigation device receives program rewriting data via a data input unit (11a) such as an optical disk slot or a wireless link (see, paragraphs [0026] through [0028], and [0030]). Then, the first control unit (11) temporarily stores the program rewriting data in a storage medium (12b) of a general controller (12) (paragraph [0028]). The program rewriting data, which is stored in the storage medium (12b), then is sent via a vehicle network (15) to a second control unit (13) the program data of which is to be rewritten. Thereafter, the program rewriting data is stored in a storage medium (13a) (see, paragraph [0033]). The program rewriting data is sent and applied in order to rewrite the program data when a predetermined period of time has elapsed after shutdown of the engine, the temperature of the storage medium (13a) lies within a predetermined range, and the voltage of the second control unit (13) lies within a predetermined range (see, paragraph [0033] and FIG. 6). US2008/0133068A1 also discloses that program data can be rewritten for a plurality of control units (see, paragraphs [0006], [0016], and [0045]).

### Summary of Invention

According to US2007/0005204A1, it is stated that a program is written for one ECU.

According to US2008/0133068A1, although it is proposed to rewrite program data efficiently for a plurality of ECUs (see, paragraph [0006]), the "DETAILED DESCRIPTION OF THE INVENTION" principally describes rewriting program data for one ECU, and does not provide a detailed account of rewriting program data for a plurality of ECUs. Stated otherwise, according to US2008/0133068A1, an arrangement for efficiently rewriting program data for a plurality of ECUs seems to imply a system for temporarily storing program rewriting data in a storage medium (12b) of the general controller (12), and thereafter sending the program rewriting data to an individual ECU (see, paragraph [0016]). Furthermore, as described above, in view of the fact that rewriting program data for one ECU is principally described in the "DETAILED DESCRIPTION OF THE INVENTION", the arrangement of US2008/0133068A1 is considered to be applicable to rewriting program data for one ECU only.

Given the above considerations, there is nothing addressed in US2007/0005204A1 and US2008/0133068A1 concerning suitable arrangements or processes that are unique to rewriting programs together for a plurality of ECUs. If programs for a plurality of ECUs are rewritten together, then the possibility of sending such programs in a wrong combination, e.g., of possibility mistaking or missing certain programs, cannot be precluded. However, US2007/0005204A1 and US2008/0133068A1 do not disclose or suggest anything concerning this point.

The present invention has been made in view of the above problems. It is an object of the present invention to provide a vehicular program rewriting system, which is capable of appropriately rewriting programs for electronic control units.

A vehicular program rewriting system according to the present invention comprises a plurality of electronic control units each including a storage unit, which stores a program therein in a rewritable manner, and a rewriting device for rewriting programs of the electronic control units, wherein the rewriting device receives a plurality of rewriting data each of which includes a rewriting program, and combination appropriateness judging information by which it is judged whether or not a combination of rewriting data is appropriate, judges whether or not the combination of rewriting data is appropriate using the combination appropriateness judging information, and rewrites the programs of the electronic control units if the combination is judged as being appropriate.

According to the present invention, the rewriting device judges whether or not the combination of rewriting data is appropriate. If the combination of rewriting data is appropriate, the rewriting device rewrites the programs of the electronic control units (ECUs). If the combination of rewriting data is in error, then the rewriting device can cancel rewriting of the programs of the ECUs. Consequently, even if programs of a plurality of ECUs are rewritten altogether, the programs can be rewritten appropriately.

The combination appropriateness judging information may include a total number of the rewriting data, and the rewriting device compares a total number of received rewriting data and the total number of the rewriting data, which is included in the combination appropriateness judging information, with each other, and rewrite the programs of the electronic control units if the compared total numbers are in agreement with each other.

Consequently, in the event that certain ones of the plurality of rewriting data (programs) transmitted to the vehicular program rewriting system are missing, or rewriting data that was not intended to be transmitted to the vehicular program rewriting system is transmitted erroneously to the vehicular program rewriting system, rewriting of the programs can be canceled. As a result, when an error is displayed due to rewriting of the programs being canceled, the user is prompted to rewrite the programs appropriately.

Each of the rewriting data may include identification information of a target electronic control unit the program of which is to be rewritten, version information of the rewriting program, and compatibility information indicative of a version of a program that can be rewritten by the rewriting program, and the combination appropriateness judging information may include the identification information of the target electronic control unit, the version information, and the compatibility information, which are included in each of the rewriting data. The rewriting device may compare the identification information of the target electronic control unit, the version information, and the compatibility information, which are included in each of the rewriting data, and the identification information of the target electronic control unit, the version information, and the compatibility information, which are included in the combination appropriateness judging information, with each other, and rewrite the programs of the electronic control units if the compared information are in agreement with each other. Thus, it is possible for programs of the ECUs to be rewritten without errors.

The vehicular program rewriting system may further comprise a higher-level device for distributing the rewriting data and the combination appropriateness judging information to the rewriting device. In this case, the rewriting device receives the combination appropriateness judging information from the higher-level device, requests that the target electronic control unit provide the version information of the program used thereby, based on the identification information of the target electronic control unit, which is included in the combination appropriateness judging information, compares the version information received from the target electronic control unit and the compatibility information included in the combination appropriateness judging information with each other, and based on the result of the comparison, judges whether or not it is appropriate to rewrite the programs using the rewriting data, and receives the rewriting data from the higher-level device if the rewriting device determines that it is appropriate to rewrite the programs using the rewriting data.

With the above arrangement, before the higher-level device sends rewriting data to the rewriting device, the higher-level device compares various items of information possessed by the target electronic control units the programs of which are to be rewritten, and combination appropriateness judging information with each other. It is thus possible to judge whether or not the rewriting data to be transmitted are appropriate before the higher-level device sends the rewriting data to the rewriting device. If there is a mistake in selecting the rewriting data to be transmitted, then the mistake can be detected at an early stage and be taken care of. Generally, the rewriting data have a large data capacity, and thus it is time-consuming to transfer the rewriting data from the higher-level device to the rewriting device. In the above process, however, it is possible to judge whether or not the rewriting data are appropriate before the rewriting data are transferred.

### Brief Description of Drawings

FIG. 1 is a block diagram of a vehicular program rewriting system according to an embodiment of the present invention;
FIG. 2 is a diagram showing the manner in which electric power is supplied to components, and signals are input to and output from the components on a vehicle 16;
FIG. 3 is a flowchart of a general processing sequence for rewriting programs for a plurality of electronic control units (ECUs) with a plurality of rewriting data (programs) transmitted via a CD-ROM;
FIG. 4 is a first flowchart of a detailed processing sequence for rewriting programs for a plurality of ECUs with a plurality of rewriting data (programs) transmitted via a CD-ROM;
FIG. 5 is a second flowchart of the detailed processing sequence for rewriting programs for a plurality of ECUs with a plurality of rewriting data (programs) transmitted via a CD-ROM;
FIG. 6 is a third flowchart of the detailed processing sequence for rewriting programs for a plurality of ECUs with a plurality of rewriting data (programs) transmitted via a CD-ROM;
FIG. 7 is a fourth flowchart of the detailed processing sequence for rewriting programs for a plurality of ECUs with a plurality of rewriting data (programs) transmitted via a CD-ROM;
FIG. 8 is a fifth flowchart of the detailed processing sequence for rewriting programs for a plurality of ECUs with a plurality of rewriting data (programs) transmitted via a CD-ROM;
FIG. 9 is a sixth flowchart of the detailed processing sequence for rewriting programs for a plurality of ECUs with a plurality of rewriting data (programs) transmitted via a CD-ROM;
FIG. 10 is a seventh flowchart of the detailed processing sequence for rewriting programs for a plurality of ECUs with a plurality of rewriting data (programs) transmitted via a CD-ROM;
FIG. 11 is an eighth flowchart of the detailed processing sequence for rewriting programs for a plurality of ECUs with a plurality of rewriting data (programs) transmitted via a CD-ROM;
FIG. 12 is a ninth flowchart of the detailed processing sequence for rewriting programs for a plurality of ECUs with a plurality of rewriting data (programs) transmitted via a CD-ROM;
FIG. 13 is a tenth flowchart of the detailed processing sequence for rewriting programs for a plurality of ECUs with a plurality of rewriting data (programs) transmitted via a CD-ROM;
FIG. 14 is an eleventh flowchart of the detailed processing sequence for rewriting programs for a plurality of ECUs with a plurality of rewriting data (programs) transmitted via a CD-ROM;
FIG. 15 is a screen transition view showing by way of example changing screens on a display unit, which correspond to certain ones of the flowcharts shown in FIGS. 9 and 10;
FIG. 16 is a flowchart of a general processing sequence for rewriting programs for a plurality of ECUs with a plurality of rewriting data (programs) transmitted via a satellite broadcasting network;
FIG. 17 is a flowchart of a detailed processing sequence for rewriting programs for a plurality of ECUs with a plurality of rewriting data (programs) transmitted via a satellite broadcasting network;
FIG. 18 is a flowchart of a general processing sequence for rewriting programs for a plurality of ECUs with a plurality of rewriting data (programs) transmitted via a mobile communication network; and
FIG. 19 is a flowchart of a detailed processing sequence for rewriting programs for a plurality of ECUs with a plurality of rewriting data (programs) transmitted via a mobile communication network.

### Description of Embodiments

### [A. Embodiment]

### 1. Global and Local Configurations:

### (1) Global Configuration:

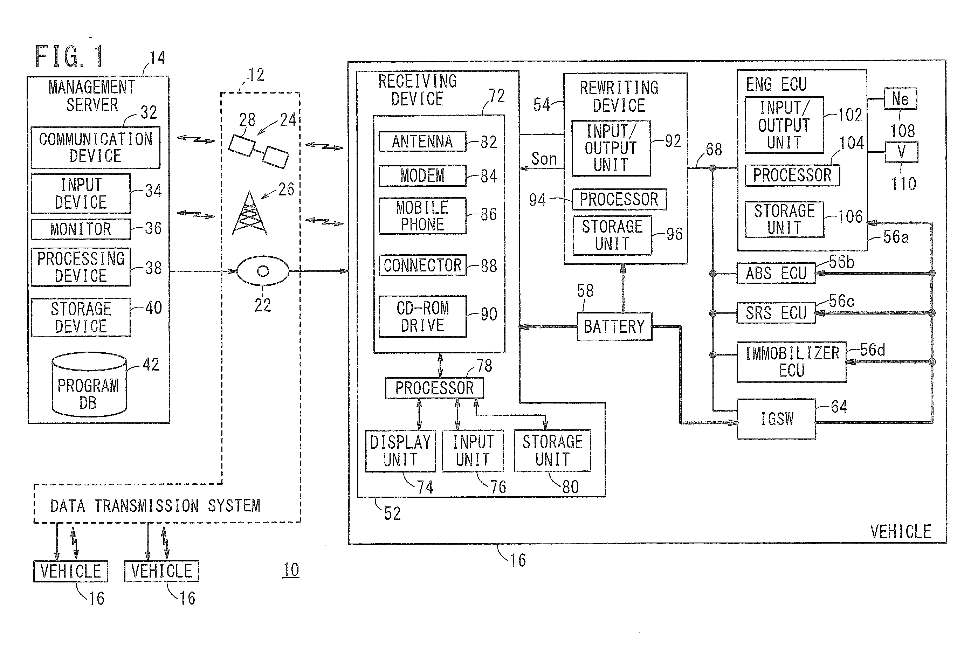

FIG. 1 is a block diagram of a vehicular program rewriting system 10 (hereinafter referred to as a "rewriting system 10" or a "system 10") according to an embodiment of the present invention. The rewriting system 10 is made up of a data transmission system 12, a management server 14 (hereinafter referred to as a "server 14"), and a plurality of vehicles 16.

The system 10 transmits a plurality of rewriting data (programs), which are used to rewrite (update) programs stored in electronic control units 56a through 56d (hereinafter referred to as "ECUs 56a through 56d") of the respective vehicles 16, from the management server 14 via the data transmission system 12 to the vehicles 16. The ECUs 56a through 56d will hereinafter be referred to collectively as "ECUs 56".

### (2) Data Transmission System 12:

The data transmission system 12 has a read-only compact disc 22 (hereinafter referred to as a "CD-ROM 22"), a satellite broadcasting network 24, and a mobile communication network 26.

The CD-ROM 22 stores set information and a plurality of rewriting data (programs) therein. The CD-ROM 22 is sent from the manufacturer of the vehicles 16 to users of the vehicles 16 via a transportation means (trucks, cargo trains, or the like) of a transport operator (postal service or home-delivery service).

The satellite broadcasting network 24 is capable of distributing the set information and the plurality of rewriting data (programs) on a satellite broadcast via a broadcasting satellite 28. The satellite broadcast may be, for example, a satellite digital audio broadcast for mobile terminals, such as Sirius XM Radio in North America.

The mobile communication network 26 is a communication network capable of providing communications using mobile phones 86. The mobile communication network 26 can send set information and a plurality of rewriting data (programs) to the vehicles 16 via communications with the mobile phones 86.

According to the present embodiment, set information and a plurality of rewriting data (programs) can be transmitted to the vehicles 16 using any of the CD-ROM 22, the satellite broadcasting network 24, or the mobile communication network 26.

### (3) Management Server 14:

The management server 14 includes a communication device 32, an input device 34, a monitor 36, a processing device 38, a storage device 40, and a rewriting program database 42 (hereinafter referred to as a "rewriting program DB 42" or a "program DB 42"). The administrator or an equivalent individual (hereinafter referred to as an "administrator or the like") who supervises the management server 14 generates a plurality of rewriting data (programs) and set information, i.e., information relevant thereto, and then stores the generated rewriting data (programs) and the set information through the input device 34 into the program DB 42. The set information includes information by which it is judged whether or not a combination of plural rewriting data (programs) is appropriate. Details of the set information will be described later.

If set information and plural rewriting data (programs) are to be distributed using the satellite broadcasting network 24, then the administrator or the like distributes the set information and the plural rewriting data (programs) using the broadcasting satellite 28, etc.

If set information and plural rewriting data (programs) are to be distributed using the mobile communication network 26, then the administrator or the like uploads new set information and plural rewriting data (programs) to the server 14. If there is a request for rewriting data (programs) from a mobile phone 86 on one of the vehicles 16, the server 14 sends the set information and the plural rewriting data (programs) via the communication device 32 and the mobile communication network 26 to the mobile phone 86.

If set information and plural rewriting data (programs) are to be transmitted using the CD-ROM 22, then the administrator or the like stores the set information and the plural rewriting data (programs) on the CD-ROM 22, and sends the CD-ROM 22 to respective users using the transport operator. Strictly speaking, the CD-ROM 22 is not sent from the management server 14. However, the CD-ROM 22, which is sent from the transport operator, shall be interpreted as having been sent from the management server 14.

### (4) Vehicle 16:

### (a) Arrangement of Vehicle 16:

Each vehicle 16 includes a receiving device 52, a program rewriting device 54 (hereinafter referred to as a "rewriting device 54"), a plurality of ECUs 56, a battery 58, and an ignition switch 64 (hereinafter referred to as an "IGSW 64"). In the present embodiment, the vehicle 16 is a gasoline-powered vehicle. However, the vehicle 16 may be a diesel vehicle or an electronic vehicle including a fuel battery vehicle and a hybrid vehicle.

On the vehicle 16, the receiving device 52 receives set information and a plurality of rewriting data (programs) transmitted from the management server 14 via the data transmission system 12. The rewriting data (programs) received by the receiving device 52 are written to the ECUs 56 by the rewriting device 54. At this time, the receiving device 52 judges whether or not a combination of the rewriting data (programs) is appropriate.

In FIG. 1, the internal configuration of only one of the vehicles 16 (i.e., the vehicle 16 shown on the right side of the drawing) is illustrated, whereas the internal configurations of the other vehicles 16 are omitted from illustration.

### (b) Receiving Device 52:

The receiving device 52 includes a data receiver 72, a display unit 74, an input unit 76, a processor 78, and a storage unit 80.

The data receiver 72 includes a wireless antenna 82, a modem 84, a mobile phone 86, a connector 88 for the mobile phone 86, and a CD-ROM drive 90 (hereinafter referred to as a "drive 90").

If set information and a plurality of rewriting data (programs) are distributed via the satellite broadcasting network 24, then the receiving device 52 receives the set information and the rewriting data (programs) through the wireless antenna 82 and the modem 84. If set information and a plurality of rewriting data (programs) are distributed via the mobile communication network 26, then the receiving device 52 receives the set information and the rewriting data (programs) through the mobile phone 86. If set information and a plurality of rewriting data (programs) are distributed via the CD-ROM 22, then the user of the vehicle 16 inserts the CD-ROM 22 into the drive 90, whereupon the receiving device 52 receives the set information and the rewriting data (programs) by reading the CD-ROM 22. The user uses the mobile phone 86, which is carried by the user, by connecting the mobile phone 86 to the connector 88 while the vehicle 16 is driven. Alternatively, the user may use the mobile phone 86 exclusively in the vehicle 16, and may keep the mobile phone 86 connected to the connector 88 at all times.

The display unit 74 displays various pieces of information for the user. The input unit 76 accepts input signals depending on actions made by the user. According to the present embodiment, the display unit 74 and the input unit 76 may comprise a touch panel, for example.

The processor 78 controls various components of the receiving device 52. The storage unit 80 includes a volatile memory and a nonvolatile memory, not shown, and stores a control program for the receiving device 52 together with set information and a plurality of rewriting data (programs) for rewriting the programs of the ECUs 56.

The receiving device 52 may include a function to operate as a navigation system. Stated otherwise, according to the present embodiment, a conventional navigation system may be configured to include the functions of the receiving device 52.

### (c) Rewriting Device 54:

The rewriting device 54 rewrites the programs of the respective ECUs through a communication line 68. The rewriting device 54 includes an input/output unit 92, a processor 94, and a storage unit 96. Details concerning functions and operations of the rewriting device 54 will be described later.

### (d) ECUs 56:

The ECUs 56, which serve to control various components of the vehicle 16, include an engine electronic control unit 56a (hereinafter referred to as an "ENG ECU 56a") for controlling the output power of an engine, not shown, of the vehicle 16, an antilock brake system electronic control unit 56b (hereinafter referred to as an "ABS ECU 56b") for controlling a brake system, not shown, of the vehicle 16, a supplementary restraint system electronic control unit 56c (hereinafter referred to as an "SRS ECU 56c") for controlling air bags, not shown, of the vehicle 16, and an immobilizer electronic control unit 56d (hereinafter referred to as an "immobilizer ECU 56d") for controlling an immobilizer, not shown, of the vehicle 16. Each of the ECUs 56a through 56d will hereinafter be referred to collectively as "ECUs 56").

Each ECU 56 has an input/output unit 102, a processor 104, and a storage unit 106. In FIG. 1, the input/output unit 102, the processor 104, and the storage unit 106 of the ENG ECU 56a are illustrated, whereas the input/output unit 102, the processor 104, and the storage unit 106 of the other ECUs 56b through 56d are omitted from illustration.

The ENG ECU 56a is connected to an engine rotational speed sensor 108 for detecting an engine rotational speed Ne [rpm], and a vehicle speed sensor 110 for detecting a vehicle speed V [km/h] of the vehicle 16.

The ECUs 56 perform data communications with each other through the communication line 68. Based on communication data (e.g., the engine rotational speed Ne and the vehicle speed V) from a certain one of the ECUs 56 (e.g., the ENG ECU 56a), the other ECUs 56 (e.g., the ABS ECU 56b, the SRS ECU 56c, and the immobilizer ECU 56d) control the vehicle 16 in cooperation with each other, in order to diagnose a certain one of the ECUs 56 (e.g., the ENG ECU 56a) for a failure, i.e., to detect an error in the communication data.

### (e) Battery 58:

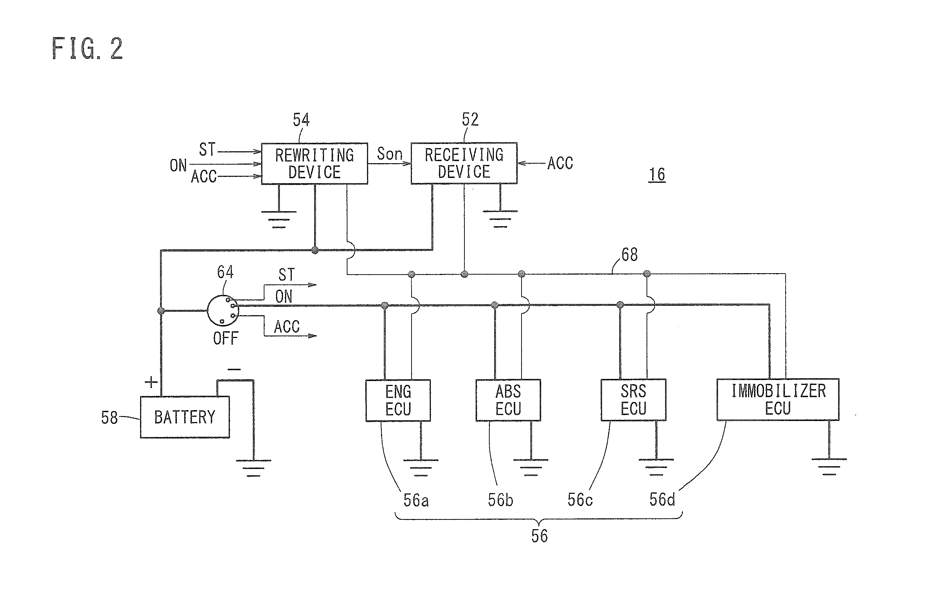

The battery 58 supplies electric power to the receiving device 52, the rewriting device 54, and the ECUs 56. Basically, the receiving device 52 is supplied selectively with electric power from the battery 58 by the IGSW 64. However, the receiving device 52 may be supplied selectively with electric power from the battery 58 depending on a command (start signal Son) from the rewriting device 54. The rewriting device 54 is continuously connected to the battery 58. The ECUs 56 are selectively supplied with electric power from the battery 58 by the IGSW 64. Details concerning supply of electric power from the battery 58 to the receiving device 52, the rewriting device 54, and the ECUs 56 will be described later with reference to FIG. 2.

### (f) IGSW 64:

According to the present embodiment, the IGSW 64 comprises a rotary switch that is capable of selecting one at a time of different positions "OFF", "ACC" (accessory), and "ON", which are arranged successively from the left when viewing the instrument panel. When the IGSW 64 is further turned to the right (clockwise) from the position "ON", the IGSW 64 selects a position "ST" (engine start), thereby starting the engine of the vehicle 16.

According to the present embodiment, when the IGSW 64 is turned to the position "OFF", essentially the battery 58 stops supplying electric power to the receiving device 52 and the ECUs 56.

If the vehicle 16 has a so-called smart start function, as described later, the IGSW 64 may comprise a push switch for use in carrying out the smart start function.

### 2. Electric Power Supply Configuration:

FIG. 2 shows the manner in which electric power is supplied to components, and the manner in which signals are input to and output from the components on the vehicle 16.

As shown in FIG. 2, electric power from the battery 58 (hereinafter referred to as "battery electric power Pbat") [W] is supplied directly to the receiving device 52 and the rewriting device 54. Therefore, the receiving device 52 and the rewriting device 54 are energizable regardless of the position selected by the IGSW 64.

According to the present embodiment, however, the receiving device 52 is turned on using the battery electric power Pbat when the IGSW 64 is in the position "ACC" or "ON", and is turned off so as not to use the battery power Pbat when the IGSW 64 is in the position "OFF". When the receiving device 52 receives the start signal Son from the rewriting device 54, the receiving device 52 nevertheless is turned on using the battery electric power Pbat until the receiving device 52 receives a cancelation command from the rewriting device 54, even if the IGSW 64 is in the position "OFF".

The battery electric power Pbat is supplied to the ECUs 56 via the IGSW 64. More specifically, when the IGSW 64 is in the position "ON", the battery electric power Pbat is supplied to the ECUs 56. On the other hand, when the IGSW 64 is in the position "OFF" or "ACC", the battery electric power Pbat is not supplied to the ECUs 56.

### 3. Program Rewriting:

### (1) If Rewriting Data (Programs) are Transmitted via the CD-ROM 22:

### (a) Outline of Rewriting Process:

FIG. 3 is a flowchart of a general processing sequence for rewriting programs for the ECUs 56 with rewriting data (programs) transmitted via the CD-ROM 22.

In step S1, when the user inserts the CD-ROM 22 into the drive 90 of the receiving device 52, the receiving device 52 reads set information and a plurality of rewriting data (programs) from the CD-ROM 22. The set information includes information (combination appropriateness judging information) for judging whether or not a combination of plural rewriting data (programs) is appropriate. Details of the set information will be described later.

In step S2, the vehicle 16 prepares itself for rewriting programs. In step S3, the vehicle 16 sends a notice to the user representing completion of preparations for rewriting programs. In step S4, the vehicle 16 receives permission for rewriting programs from the user.

In step S5, the vehicle 16 requests the user to turn the IGSW 64 to the position "OFF". At this time, the vehicle 16 is set to keep the receiving device 52 on, even if the IGSW 64 is in the position "OFF". In step S6, as the user turns the IGSW 64 to the position "OFF", the vehicle 16 confirms that the ECUs 56 have been turned off. At this time, the receiving device 52 remains on.

In step S7, the vehicle 16 requests the user to turn the IGSW 64 to the position "ON". In step S8, as the user turns the IGSW 64 to the position "ON", the vehicle 16 confirms that the ECUs 56 have been reactivated, i.e., that the ECUs 56 are turned on.

In step S9, the vehicle 16 carries out a program rewriting process. According to the present embodiment, the vehicle 16 carries out the program rewriting process for a plurality of ECUs 56.

In steps S1 through S5, the vehicle 16 is capable of being driven. On the other hand, in steps S6 through S9, the engine is shut down and the vehicle 16 cannot be driven. In steps S1 through S3, the user cannot insert another CD-ROM 22, e.g., a music CD-ROM, into the drive 90.

### (b) Details of Rewriting Process:

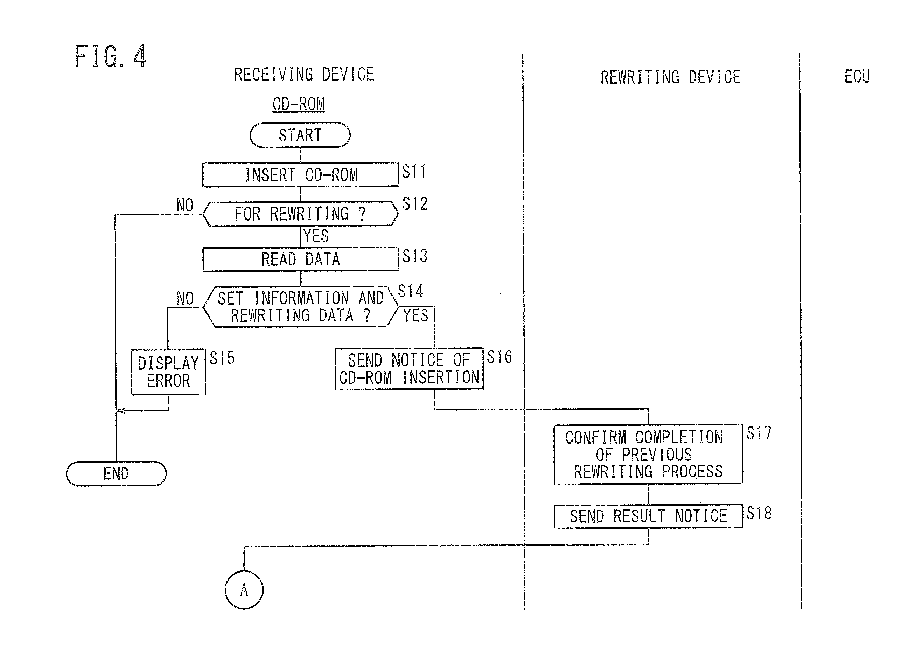

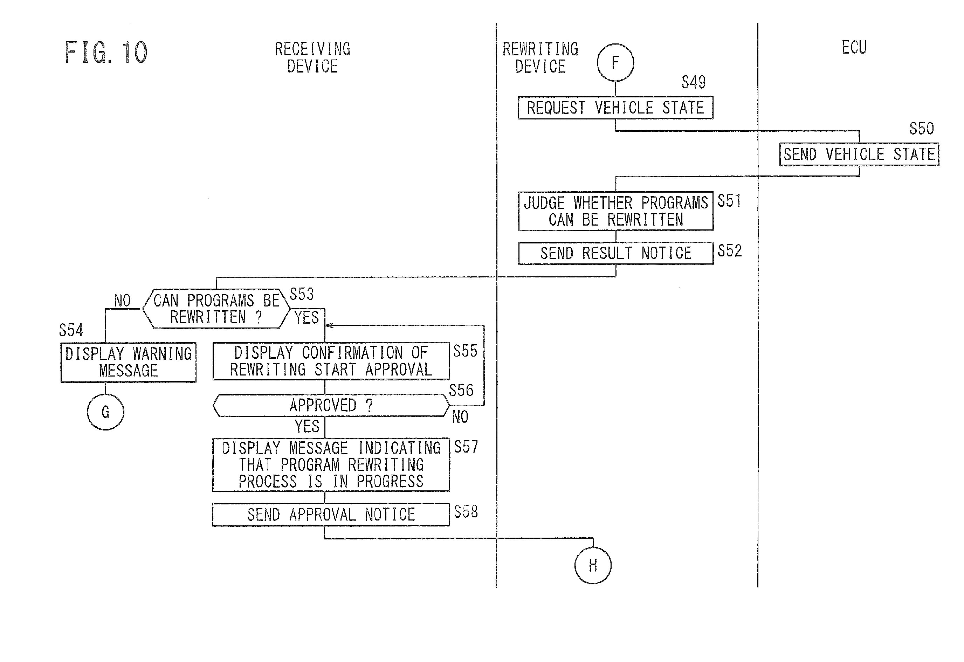

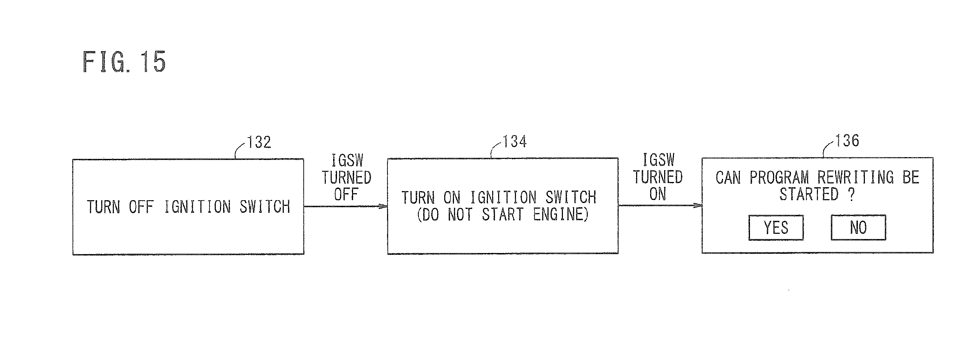

FIGS. 4 through 14 are flowcharts of a detailed processing sequence for rewriting programs for the ECUs 56 with rewriting data (programs) transmitted via the CD-ROM 22. FIG. 15 is a screen transition view showing by way of example screens that are changed on the display unit 74, which correspond to certain ones of the flowcharts shown in FIGS. 9 and 10.

Steps S11 through S16 correspond to step S1 of FIG. 3, and steps S17 through S39 correspond to step S2. Step S40 corresponds to step S3, and step S41 corresponds to step S4. Steps S42 through S44 correspond to step S5, and step S45 corresponds to step S6. Steps S46 and S47 correspond to step S7, and step S48 corresponds to step S8. Steps S49 through S84 correspond to step S9.

In step S11 of FIG. 4, the CD-ROM 22 is inserted into the drive 90 of the receiving device 52. In step S12, the receiving device 52 judges whether or not the inserted CD-ROM 22 is a CD for rewriting programs. If the inserted CD-ROM 22 is not intended for rewriting programs (S12: NO), then the present processing sequence is brought to an end. If the inserted CD-ROM 22 is a CD for rewriting programs (S12: YES), then in step S13, the receiving device 52 reads the data from the CD-ROM 22.

While data is read from the CD-ROM 22, the receiving device 52 displays, on the display unit 74, information indicating that the receiving device 52 is reading data from the CD-ROM 22. For example, the receiving device 52 displays a message on the display unit 74, "READING REWRITING DATA. ALTHOUGH THE VEHICLE CAN BE DRIVEN, THE CD-ROM DRIVE CANNOT BE USED."

In step S14, the receiving device 52 judges whether or not set information and rewriting data (programs) are included in the data that is read from the CD-ROM 22.

Rewriting data (programs) include identification information (hereinafter referred to as "ECU ID") for the ECUs 56 (hereinafter referred to as "target ECUs 56tar") the programs of which are to be rewritten, a plurality of rewriting programs, identification information (hereinafter referred to as "program IDs") for the respective rewriting programs, and compatibility information. The program IDs include version information in relation to the respective rewriting programs.

The set information includes ECU IDs of the respective target ECUs 56tar, program IDs (including version information), compatibility information, the total number of rewriting programs, hash values of the respective rewriting data, and cooperative control information (combination reinstating information).

The ECU IDs, the program IDs (version information), and the compatibility information contained in the rewriting data (programs) are the same as the ECU IDs, the program IDs, and the compatibility information of the set information. Therefore, it is possible to judge whether or not the rewriting data (programs) are appropriate by comparing such information items.

The compatibility information concerning rewriting programs comprises information in relation to versions of the programs that can be rewritten by the rewriting programs. Using such compatibility information, it is possible to judge whether or not the programs used by the ECUs 56 can be replaced with the rewriting programs.

The cooperative control information is information representative of an association between target ECUs 56tar that control the vehicle 16 in cooperation with each other. If the ENG ECU 56a and the ABS ECU 56b operate to control the vehicle 16 in cooperation with each other, for example, the cooperative control information includes information indicative of the fact that the ENG ECU 56a and the ABS ECU 56b serve to control the vehicle 16 in cooperation with each other, i.e., information which indicates that a current rewriting action will affect cooperative control (data communications) between the ENG ECU 56a and the ABS ECU 56b, along with requests for rewriting programs of both the ENG ECU 56a and the ABS ECU 56b, restarting the ENG ECU 56a and the ABS ECU 56b, and simultaneously reinstating the ENG ECU 56a and the ABS ECU 56b. A process of using such cooperative control information will be described later.

In each of the rewriting data (programs) and the set information, an ECU ID, a program ID (version information), and compatibility information are combined together for each rewriting program. Stated otherwise, an ECU ID and a program ID are added as information ancillary to the rewriting program.

Since program rewriting is carried out on each target ECU 56tar, a target ECU 56tar, which is selected from among the target ECUs 56tar as one whose program is actually to be rewritten, will be referred to as a "present target ECU 56tar" in order to distinguish the selected target ECU 56tar from the other target ECUs 56tar.

If set information and rewriting data (programs) are not included in the data read from the CD-ROM 22 (S14: NO), then in step S15, the receiving device 52 displays an error on the display unit 74. For example, the receiving device 52 displays on the display unit 74 the message, "CD-ROM IS FAULTY. CONTACT THE DEALER.".

If set information and rewriting data (programs) are included in the data read from the CD-ROM 22 (S14: YES), then in step S16, the receiving device 52 indicates to the rewriting device 54 that the CD-ROM 22 has been inserted.

In step S17, the rewriting device 54 judges whether or not a previous rewriting process has been completed. For example, if the rewriting device 54 stores other rewriting data (programs), but has not yet performed a rewriting process using the other stored rewriting data (programs), then it is determined that the previous rewriting process has not been completed.

In step S18, the rewriting device 54 sends a notice to the receiving device 52 indicating the decision of step S17.

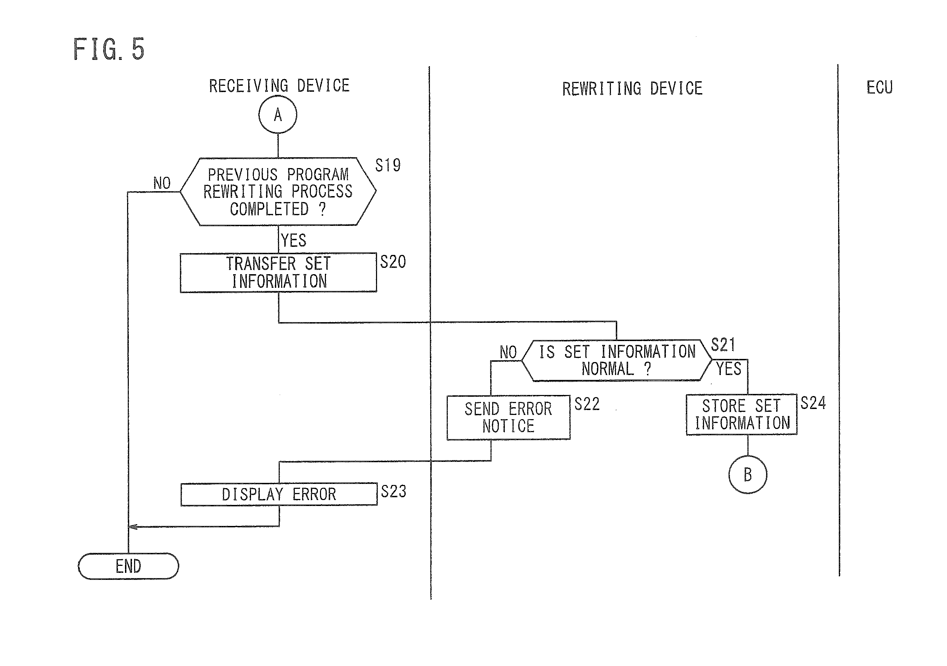

In step S19 of FIG. 5, based on the notice from the rewriting device 54, the receiving device 52 confirms whether or not the previous rewriting process has been completed. If the previous rewriting process has been completed (S19: YES), then control proceeds to step S20. If the previous rewriting process has not been completed (S19: NO), then the receiving device 52 prioritizes completion of the previous rewriting process. Therefore, the present rewriting process on the vehicle 16 is terminated. At this time, the receiving device 52 may display a message on the display unit 74 prompting the user to carry out and complete the previous rewriting process. If the storage unit 80 of the receiving device 52 or the storage unit 96 of the rewriting device 54 has free storage space therein, then the set information and the rewriting data (programs) that have presently been received may be stored.

In step S20, the receiving device 52 transfers the set information to the rewriting device 54.

In step S21, the rewriting device 54 judges whether or not the set information is normal based on, for example, whether the set information has a normal data structure, and whether the set information has a normal hash value.

If the set information is not normal (S21: NO), then in step S22, the rewriting device 54 sends an error notice to the receiving device 52. In step S23, the receiving device 52 displays an error on the display unit 74, erases the set information and the rewriting data (programs) stored in the storage unit 80, and brings the present processing sequence to an end. The displayed error may be a message which indicates that, since the set information is faulty, the user should contact the dealer.

If the set information is normal (S21: YES), then in step S24, the rewriting device 54 stores the set information in the storage unit 96.

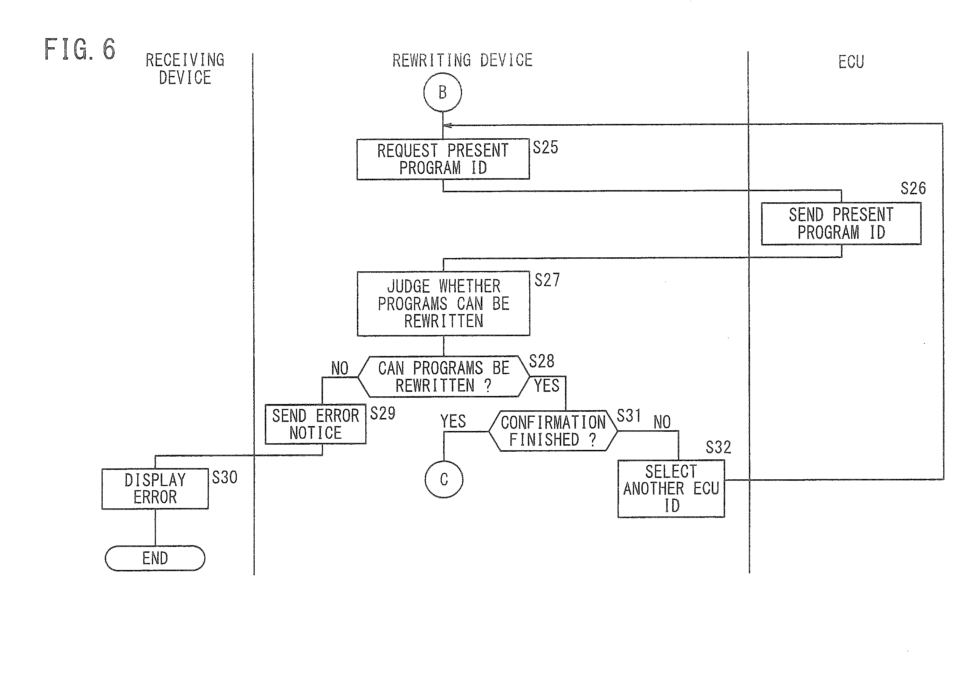

In step S25 of FIG. 6, the rewriting device 54 selects one of the ECU IDs included in the set information, and requests the ECU 56 corresponding to the selected ECU ID to supply the program ID of the present program, i.e., the program to be rewritten. As described above, the compatibility information is information representing the version of the program that can be rewritten by the rewriting program, and that the program ID includes the version information of the program. It is thus possible to judge whether or not the program can be rewritten by comparing the compatibility information included in the set information with the version information included in the received program ID. The ECU 56 corresponding to the selected ECU ID serves as a target ECU 56tar. ECU IDs may be selected consecutively in an ascending or descending order. Alternatively, the selecting order may be included in the set information.

In step S26, the target ECU 56tar from which the program ID has been requested sends the program ID of the present program to the rewriting device 54.

In step S27, the rewriting device 54 judges whether or not the program indicated by the program ID, which is received from the target ECU 56tar, can be rewritten by the program indicated by the program ID combined with the ECU ID selected from the set information. Stated otherwise, the rewriting device 54 judges whether or not the rewriting program is appropriate by comparing the version information included in the program ID received from the target ECU 56tar with the compatibility information included in the set information. More specifically, if the version indicated by the compatibility information included in the set information is newer than the version indicated by the version information included in the program ID received from the target ECU 56tar, then it is determined that the present program needs to be rewritten.

If the present program cannot be written (S28: NO), then in step S29, the rewriting device 54 sends an error notice to the receiving device 52. In step S30, the receiving device 52 displays an error on the display unit 74, erases the set information and the rewriting data (programs) stored in the storage unit 80, and then brings the present processing sequence to an end.

If the present program can be written (S28: YES), then in step S31, the rewriting device 54 judges whether or not the confirmation as to whether the programs can be rewritten with respect to all of the ECU IDs included in the set information (S27, S28) has finished. If the confirmation as to whether the programs can be rewritten with respect to certain ECU IDs has not yet been completed (S31: NO), then in step S32, the rewriting device 54 selects another ECU ID, which has not yet been confirmed as to whether the program can be rewritten, and control returns to step S25.

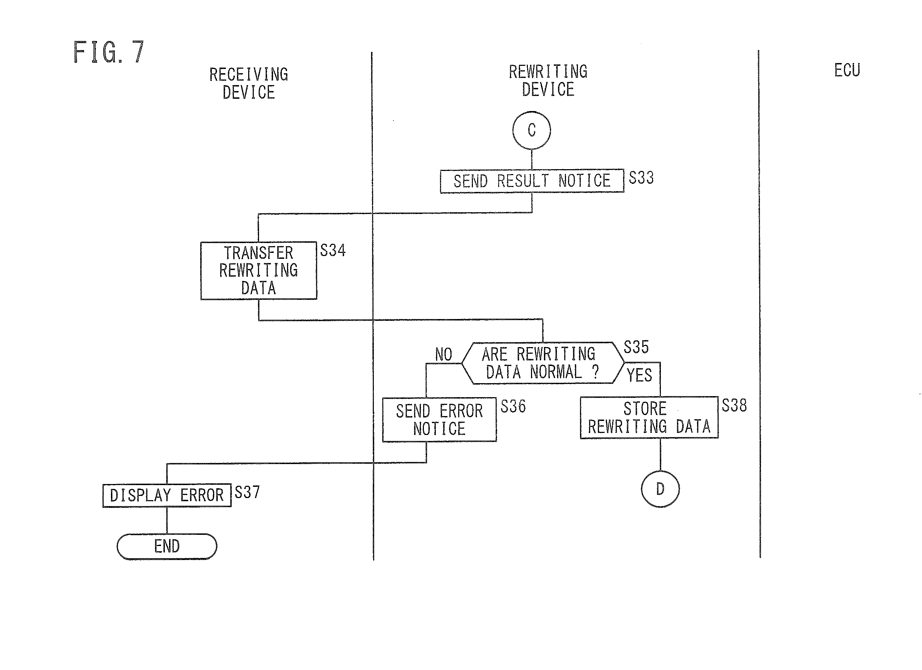

If the confirmation as to whether the programs can be rewritten with respect to all of the ECU IDs (S27, S28) has finished (S31: YES), then in step S33 of FIG. 7, the rewriting device 54 sends information to the receiving device 52 indicative of the fact that the programs can be rewritten by all of the rewriting data (programs). In step S34, the receiving device 52 sends all of the rewriting data (programs) to the rewriting device 54.

In step S35, the rewriting device 54 judges whether or not the rewriting data (programs) are normal based on whether the total number of programs in the set information and the total number of the rewriting data (programs) received by the rewriting device 54 are the same, whether the program IDs and the compatibility information in the set information and the program IDs and the compatibility information included in the received rewriting data (programs) are in agreement with each other, whether the hash values of the rewriting data (programs) in the set information and the hash values calculated from the rewriting data (programs) are the same, and whether the data structure of the received rewriting data (programs) is normal.

If any one of the rewriting data (programs) is abnormal (S35: NO), then in step S36, the rewriting device 54 sends an error notice to the receiving device 52. In step S37, the receiving device 52 displays the error notice on the display unit 74, erases the set information and the rewriting data (programs) stored in the storage unit 80, and brings the present processing sequence to an end. The displayed error may be a message indicating that, since the rewriting data (programs) are faulty, the user should contact the dealer.

If all of the rewriting data (programs) are normal (S35: YES), then in step S38, the rewriting device 54 stores the rewriting data (programs) in the storage unit 96.

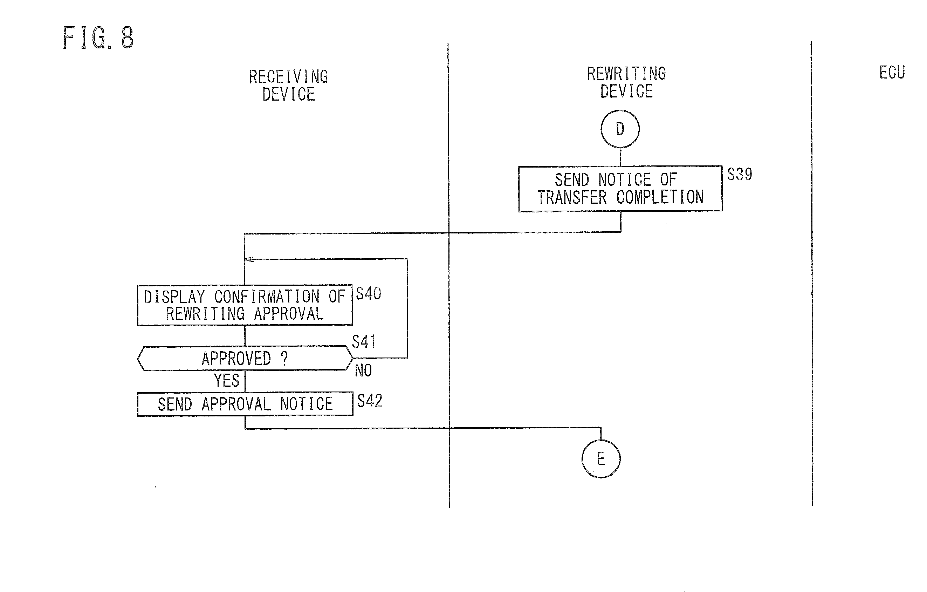

In step S39 of FIG. 8, the rewriting device 54 sends a notice to the receiving device 52 indicating that transfer of all of the rewriting data (programs) is completed. In step S40, the receiving device 52 displays, on the display unit 74, a message requesting the user to move the vehicle 16 to a safe place, and then to touch a displayed button image, not shown, in order to approve program rewriting after the vehicle 16 has been moved, and to rewrite the program of the target ECUs 56tar.

If the user has not touched the button image and hence has not approved program rewriting (S41: NO), then control returns to step S40. If the user touches the button image and hence has approved program rewriting (S41: YES), then in step S42, the receiving device 52 sends a notice indicating the user's approval to the rewriting device 54.

In step S43 of FIG. 9, the rewriting device 54 sends a start signal Son to the receiving device 52, thereby requesting that the receiving device 52 be inhibited from turning itself off. Therefore, the receiving device 52 remains on even if the IGSW 64 is turned to the position "OFF".

In step S44, the receiving device 52 displays, on the display unit 74, a message for prompting the user to turn the IGSW 64 to the position "OFF". For example, the message may read, "TURN OFF IGNITION SWITCH", as indicated by the screen 132 shown in FIG. 15. The message is continuously displayed on the display unit 74 until the receiving device 52 receives a notice from the rewriting device 54 indicating that the ECUs 56 have been turned off.

In step S45, the rewriting device 54 reads the position of the IGSW 64, and judges whether or not the user has turned off the IGSW 64. If the user has not turned the IGSW 64 and the IGSW 64 is not detected as being turned off (S45: NO), then step S45 is repeated.

If the user has turned the IGSW 64 and the IGSW 64 is detected as being turned off (S45: YES), then in step S46, the rewriting device 54 sends a notice to the receiving device 52 indicating that the IGSW 64 has been turned off, i.e., that the ECUs 56 have been turned off. The rewriting device 54 may determine if the user has turned off the IGSW 64 depending on whether or not there is a response to a response request, which the rewriting device 54 sends to a certain one or more of the ECUs 56. If there is a response from the ECUs 56, then the rewriting device 54 determines that the IGSW 64 has not been turned off, whereas if there is not a response from the ECUs 56, then the rewriting device 54 determines that the IGSW 64 has been turned off.

In step S47, the receiving device 52 displays, on the display unit 74, a message requesting the user to turn on the IGSW 64 again while inhibiting the engine from being started. For example, the message may read, "TURN ON IGNITION SWITCH (DO NO START ENGINE)", as indicated by a screen 134 shown in FIG. 15. The message is continuously displayed on the display unit 74 until the rewriting device 54 determines that the IGSW 64 has been turned on in step S48.

In step S48, the rewriting device 54 reads the position of the IGSW 64, and judges whether or not the user has turned on the IGSW 64. Alternatively, similar to step S45, the rewriting device 54 may determine if the user has turned on the IGSW 64 by sending a response request to a certain one or more of the ECUs 56. If the user has not turned the IGSW 64 and the IGSW 64 is not detected as being turned on (S48: NO), then step S48 is repeated. If the user has turned the IGSW 64 and the IGSW 64 is detected as being turned on (S48: YES), then control proceeds to step S49.

In step S49 of FIG. 10, the rewriting device 54 asks certain ones of the ECUs 56 for various states of the vehicle 16. The states of the vehicle 16 may include the engine rotational speed Ne, the vehicle speed V, the gearshift position, the temperature of each ECU 56, the operating state of the immobilizer ECU 56d, the operating state of an air conditioner, the operating state of the heating wires of a rear windshield, the operating condition of the headlights, and the operating state of heaters of the passenger seats. According to the present embodiment, the states of the vehicle 16 are acquired from respective ECUs 56. However, the states of the vehicle 16 may be acquired from other various sensors.

In step S50, the ECUs 56 send the states of the vehicle 16 to the rewriting device 54.

In step S51, the rewriting device 54 judges whether the vehicle 16 is in a state in which programs can be rewritten. The rewriting device 54 may make such a judgment based on whether or not all of the following conditions (i) through (v) have been satisfied:
(i) The engine rotational speed Ne is 0 [rpm];
(ii) The vehicle speed V is 0 [km/h];
(iii)The gearshift position is "P" (park);
(iv) The temperature of the target ECUs 56tar is equal to or lower than a rewrite enabling temperature; and
(v) The immobilizer ECU 56d has determined that a legitimate key has been inserted.

Conditions (i) through (iii) serve to confirm that the vehicle 16 is at rest. Condition (iv) serves to judge an operational malfunction of the ECUs 56. Condition (v) serves to confirm that a legitimate user is using the vehicle 16.

At this time, the rewriting device 54 also determines whether or not any of the following conditions (vi) through (ix) have been satisfied:
(vi) The air conditioner is turned off;
(vii)The heating wires of the rear windshield are turned off;
(viii)The headlights are turned off; and
(ix) The heaters of the passenger seats are turned off.

Conditions (vi) through (ix) serve to judge the consumption state of the battery electric power Pbat, and to ask the user to minimize consumption of the battery electric power Pbat. Even if conditions (vi) through (ix) are not satisfied, the rewriting device 54 does not necessarily decide that programs cannot be rewritten, but rather, the user is given a warning concerning such conditions in step S55, as will be described below.

In step S52, the rewriting device 54 sends a notice indicating the decision of step S51 to the receiving device 52. If any one of conditions (i) through (v) is not satisfied, thus indicating that the programs cannot be rewritten (S53: NO), then the receiving device 52 displays, on the display unit 74, a warning message pointing out one of the conditions (i) through (v) that is not satisfied, and prompting the user to take actions to satisfy the condition. Thereafter, control returns to step S49.

Even if the programs cannot be rewritten, the receiving device 52 may not necessarily send a special signal to the rewriting device 54. Stated otherwise, if the rewriting device 54 determines that programs cannot be rewritten in step S51, then in step S52, the rewriting device 54 may send a notice indicating the decision of step S51 to the receiving device 52, after which control returns to step S49.

If the programs can be rewritten in step S53 (S53: YES), then in step S55, the receiving device 52 displays, on the display unit 74, an operation screen for confirming approval of start of the rewriting process (rewriting process starting approval confirmation display). As indicated by a screen 136 shown in FIG. 15, the operation screen may include, for example, a message, "SHOULD PROGRAM REWRITING BE STARTED?", together with a button ("YES") for approving start of the program rewriting process, and a button ("NO") for disapproving start of the program rewriting process. If any one of conditions (vi) through (ix) is not satisfied, then a warning message concerning the unsatisfied condition may also be displayed together with the operation screen.

If the user has not performed an operation on the operation screen and hence user approval has not been obtained (S56: NO), then control returns to step S55. If the user has performed an operation on the operation screen and hence user approval is obtained (S56: YES), then in step S57, the receiving device 52 displays, on the display unit 74, a message indicating that the program rewriting process is in progress. For example, the message, "PROGRAM IS BEING REWRITTEN. DO NOT TURN OFF IGNITION SWITCH" may be displayed. Although not shown, if a button ("NO") for disapproving start of the program rewriting process is touched, then the processing sequence is brought to an end without the program rewriting process being carried out. When the IGSW 64 is turned at a subsequent time, the processing sequence starts from step S42.

In step S58, the receiving device 52 sends a notice indicating user approval to the rewriting device 54.

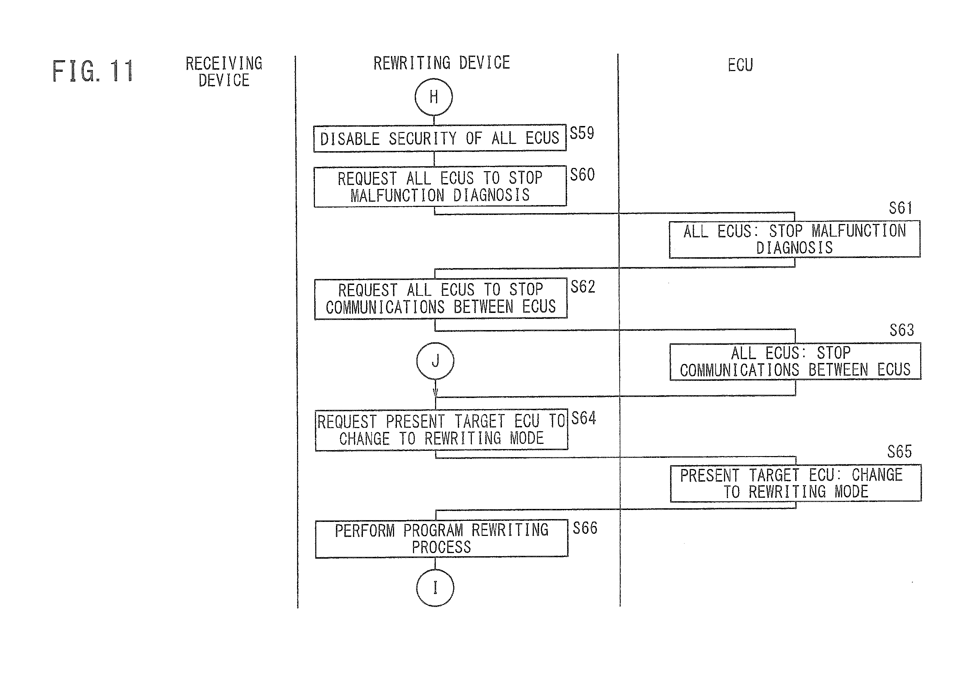

In step S59 of FIG. 11, the rewriting device 54 communicates with all of the ECUs 56 and disables the security settings on all of the ECUs 56.

In step S60, the rewriting device 54 requests that all of the ECUs 56 terminate the malfunction diagnosis, which is carried out between the ECUs 56. In step S61, all of the ECUs 56 terminate the malfunction diagnosis.

In step S62, the rewriting device 54 requests that all of the ECUs 56 stop communicating with each other. In step S63, the ECUs 56 stop communications therebetween. The ECUs 56 are now incapable of performing cooperative control.

In step S64, the rewriting device 54 requests that the present target ECU 56tar be changed into a rewriting mode. In step S65, the present target ECU 56tar changes to the rewriting mode.

In step S66, the rewriting device 54 performs the program rewriting process on the present target ECU 56tar.

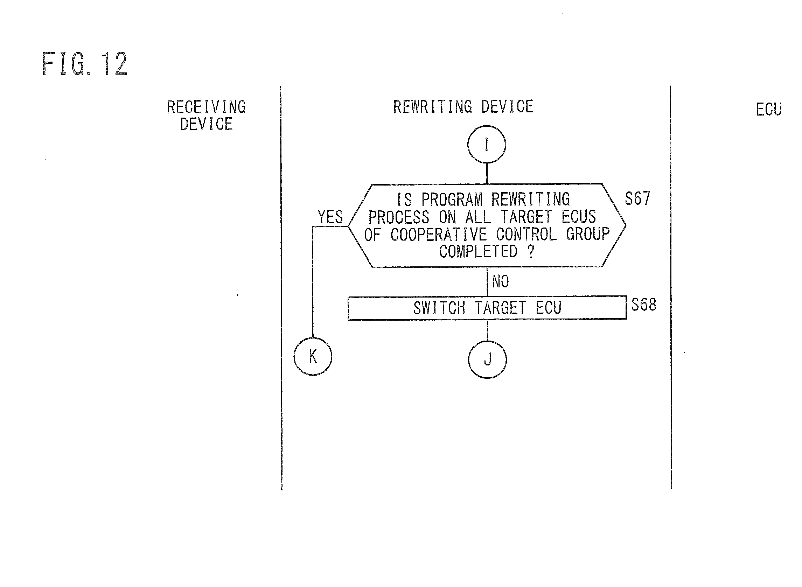

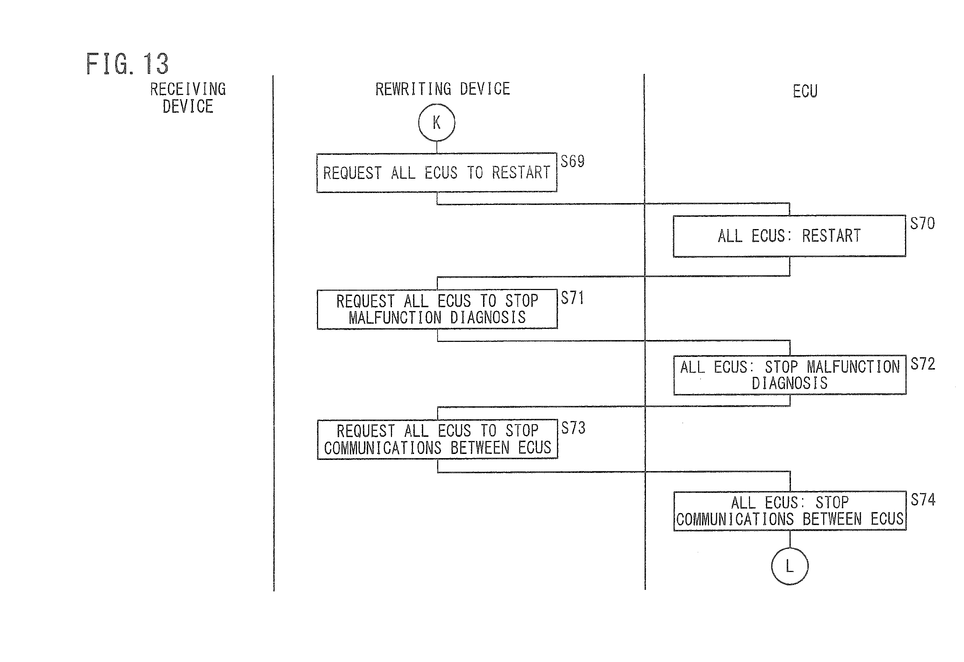

In step S67 of FIG. 12, the rewriting device 54 judges whether or not the program rewriting process on all of the target ECUs 56tar, including the present target ECU 56tar, which are included in a group (cooperative control group) of target ECUs 56tar that carry out cooperative control, is completed. The rewriting device 54 makes such a judgment based on cooperative control information, which is included in the set information. More specifically, the rewriting device 54 judges whether or not there is another target ECU 56tar which is intended to perform cooperative control with the present target ECU 56tar. If there is another target ECU 56tar which performs cooperative control, then the rewriting device 54 judges whether or not the program rewriting process on the other target ECU 56tar has been completed. If there is not another target ECU 56tar which performs cooperative control, then the rewriting device 54 determines that the program rewriting process has been completed on all of the target ECUs 56tar included in the cooperative control group, and control proceeds to step S69 of FIG. 13.

If the program rewriting process has not been completed on certain ones of the target ECUs 56tar included in the cooperative control group (S67: NO), then in step S68, the rewriting device 54 switches from a target ECU 56tar on which the program rewriting process is to be performed to a target ECU 56tar on which the program rewriting process has not been completed, and then control returns to step S64.

If the program rewriting process has been completed on certain ones of the target ECUs 56tar included in the cooperative control group (S67: YES), then in step S69 of FIG. 13, the rewriting device 54 requests that all the ECUs 56 be restarted. At this time, the rewriting device 54 makes the request directly to all of the ECUs 56. Alternatively, as indicated by the screens 132, 134 shown in FIG. 15, after the user is requested to turn off the IGSW 64, the user may be requested to turn on the IGSW 64 again. In step S70, the ECUs 56 are restarted.

After restarting of the ECUs 56, in step S71, the rewriting device 54 requests that all of the ECUs 56 stop the malfunction diagnosis process. In step S72, the ECUs 56, which have been restarted, stop carrying out the malfunction diagnosis process.

In step S73, the rewriting device 54 requests that communications between all of the ECUs 56 be stopped. In step S74, each of the ECUs 56 stops communicating with the other ECUs 56.

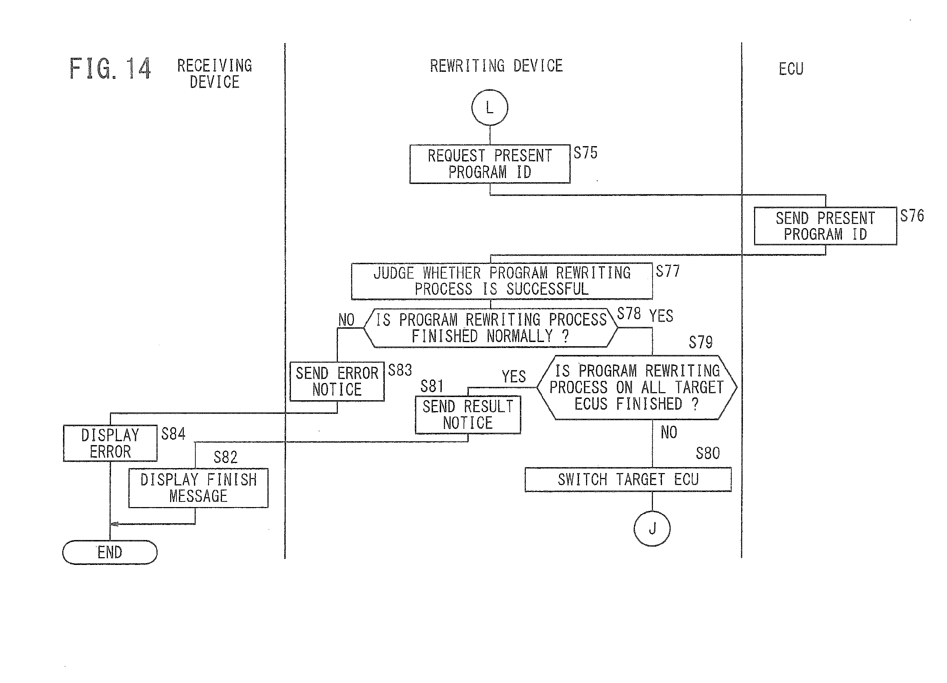

In steps S75 through S77 of FIG. 14, the rewriting device 54 evaluates operations of each of the target ECUs 56tar included in the same cooperative control group, i.e., determines whether or not the program rewriting process has been successful. More specifically, in step S75, the rewriting device 54 requests each of the target ECUs 56tar to supply the program ID of the present program, i.e., the program that has been rewritten.

In step S76, each of the target ECUs 56tar sends the program ID of the present program to the rewriting device 54.

In step S77, the rewriting device 54 confirms whether or not the program rewriting process has been successful by confirming the program ID received from each of the target ECUs 56tar. More specifically, the rewriting device 54 confirms whether or not the program rewriting process has been successful by judging whether the received program ID (version information) is in agreement with the program ID (version information) of the rewriting data (program). If the program IDs are in agreement, then the rewriting device 54 determines that the program rewriting process has been successful. If the program IDs are not in agreement, then the rewriting device 54 determines that the program rewriting process has failed. If the program rewriting process has been successful and finished normally (S78: YES), then in step S79, the rewriting device 54 judges whether or not the program rewriting process has been completed with respect to all of the target ECUs 56tar. The rewriting device 54 makes such a judgment using information concerning the target ECUs 56tar, which is included in the set information, for example. If the program rewriting process has not been completed with respect to certain ones of the target ECUs 56tar (S79: NO), then in step S80, the rewriting device 54 switches the target ECU 56tar, which is currently being worked on, i.e., the present target ECU 56tar, to another target ECU 56tar. Control then returns to step S64 of FIG. 11.

If the program rewriting process has been completed with respect to all of the target ECUs 56tar (S79: YES), then in step S81, the rewriting device 54 sends a notice to the receiving device 52 indicating that the program rewriting process has finished normally, and then brings the program rewriting process to an end.

In step S82, the receiving device 52 displays, on the display unit 74, a message indicating that the program rewriting process has finished normally. The message may include information indicating that the program rewriting process has terminated, information indicating that the IGSW 64 should be turned off, a code number (specific numerical value) indicating completion of the program rewriting process, and information indicating that the code number should be sent to the manufacturer together with contact information of the manufacturer. Upon reading the message, the user sends the code number to the manufacturer, whereupon the manufacturer is able to confirm that the program rewriting process has been completed. The user can send the code number by telephone, electronic mail, an entry made on an entry screen of the manufacturer's home page, or the like.

If the program rewriting process fails and does not finish normally (S78: NO), then in step S83, the rewriting device 54 sends an error notice to the receiving device 52. In step S84, the receiving device 52 displays, on the display unit 74, a message prompting the user to turn off the IGSW 64 and contact the dealer. For example, the message displayed on the display unit 74 may read, "PROGRAM REWRITING FINISHED ABNORMALLY. TURN OFF IGNITION SWITCH AND CONTACT DEALER."

### (2) If Rewriting Data (Programs) are Transmitted via Satellite Broadcasting Network 24:

### (a) Outline of Rewriting Process:

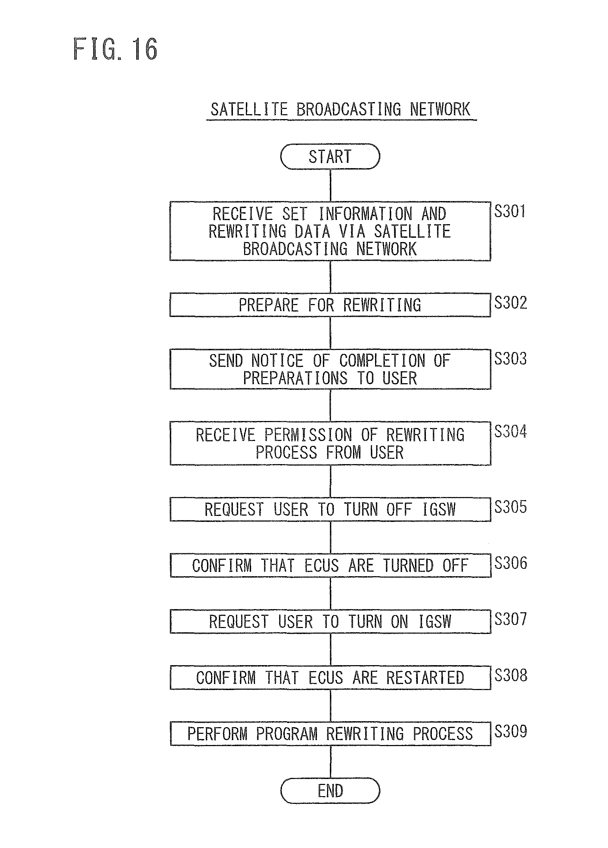

FIG. 16 is a flowchart of a general processing sequence for rewriting programs for a plurality of ECUs 56 with a plurality of rewriting data (programs) transmitted via a satellite broadcasting network 24.

In step S301, the receiving device 52 receives set information and a plurality of rewriting data (programs) via the satellite broadcasting network 24.

Steps S302 through S309 are identical to steps S2 through S9 of FIG. 3.

In steps S301 through S305, the vehicle 16 is capable of being driven. On the other hand, in steps S306 through S309, the engine is shut down and the vehicle 16 is not capable of being driven.

### (b) Details of Rewriting Process:

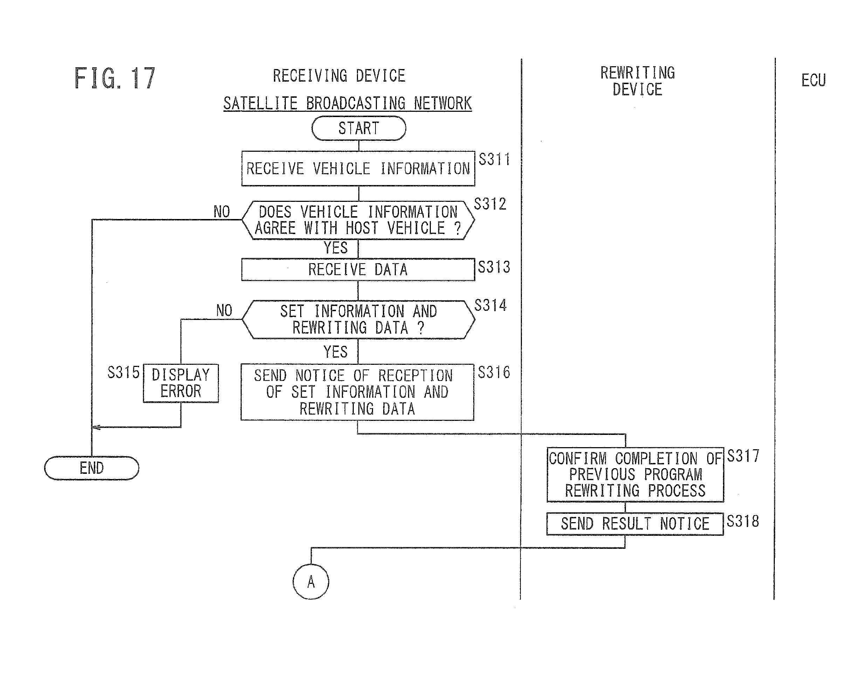

FIG. 17 is a flowchart of a detailed processing sequence for rewriting programs for a plurality of ECUs 56 with a plurality of rewriting data (programs) transmitted via the satellite broadcasting network 24. Steps of the processing sequence shown in FIG. 17, which are in common with steps of the processing sequence (FIGS. 4 through 14) for rewriting programs for a plurality of ECUs with a plurality of rewriting data (programs) transmitted via the CD-ROM 22, will be described with reference to FIGS. 4 through 14,

Steps S311 through S316 correspond to step S301 of FIG. 16.

In step S311, the receiving device 52 receives vehicle information via the satellite broadcasting network 24. More specifically, when the server 14 sends vehicle information via a broadcasting station, not shown, the vehicle information is relayed by the broadcasting satellite 28, and then the vehicle information is received by the wireless antenna 82 of the receiving device 52. Vehicle information that is received by the wireless antenna 82 is demodulated by the modem 84 and output to the processor 78.

In step S312, the receiving device 52 judges whether or not the received vehicle information is in agreement with the vehicle 16 (host vehicle). If the vehicle information is in agreement with the vehicle 16 (S312: YES), then control proceeds to step S313. If the vehicle information is not in agreement with the vehicle 16 (S312: NO), then the present processing sequence is brought to an end.

In step S313, the receiving device 52 receives data (set information and a plurality of rewriting data (programs)) from the satellite broadcasting network 24. More specifically, the receiving device 52 receives the data in the same manner as in step S311. The set information and the plural rewriting data (programs) contain the same content as the set information and the plural rewriting data stored in the CD-ROM 22 (FIGS. 4 through 14).

In step S314, the receiving device 52 judges whether or not set information and rewriting data (programs) are included in the data received from the satellite broadcasting network 24. If set information and rewriting data (programs) are not included in the received data (S314: NO), then in step S315, the receiving device 52 displays an error on the display unit 74. For example, the receiving device 52 displays on the display unit 74 the message, "RECEIVED REWRITING DATA ARE FAULTY. CONTACT THE DEALER."". If set information and rewriting data (programs) are included in the received data (S314: YES), then control proceeds to step S316.

In step S316, the receiving device 52 sends a notice indicating proper reception of the set information and the rewriting data (programs) to the rewriting device 54.

Steps S317 through S318 of FIG. 17 are identical to steps S17 through S18 of FIG. 14. These steps are followed by step S19 of FIG. 5.

### (3) If Rewriting Data (programs) are Transmitted via the Mobile Communication Network 26:

### (a) Outline of Rewriting Process:

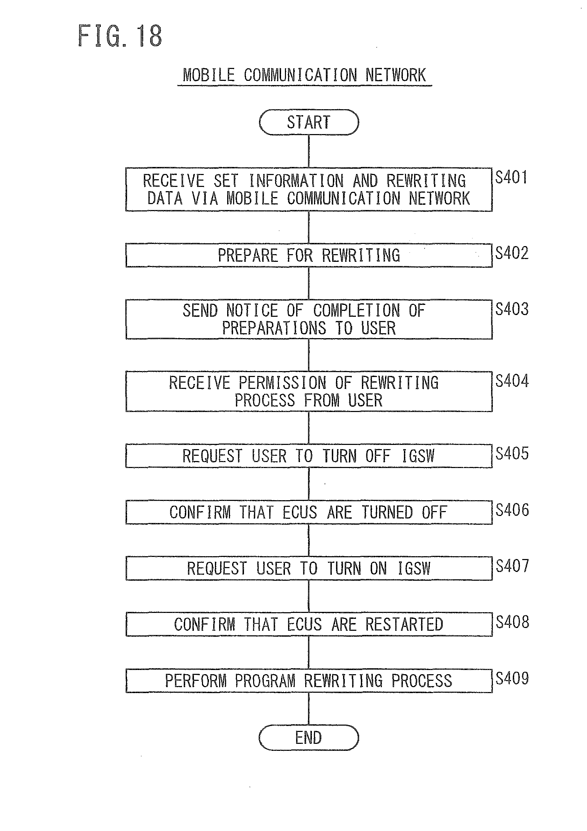

FIG. 18 is a flowchart of a detailed processing sequence for rewriting programs for a plurality of ECUs 56 with a plurality of rewriting data (programs) transmitted via the mobile communication network 26.

In step S401, the receiving device 52 receives set information and a plurality of rewriting data (programs) via the mobile communication network 26. In order to receive the set information and the plurality of rewriting data (programs) via the mobile communication network 26, the mobile phone 86 is connected to the connector 88 in advance.

Steps S402 through S409 are identical to steps S2 through S9 of FIG. 3 and steps S302 through S309 of FIG. 16.

In steps S401 through S405, the vehicle 16 is capable of being driven. On the other hand, in steps S406 through S409, the engine is shut down and the vehicle 16 is not capable of being driven.

### (b) Details of Rewriting Process:

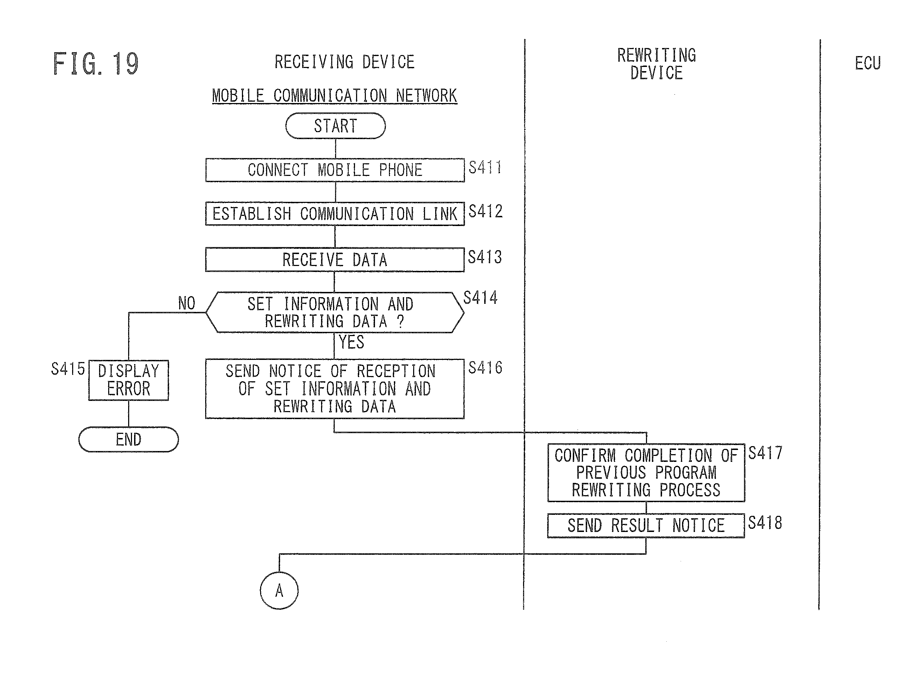

FIG. 19 is a flowchart of a detailed processing sequence for rewriting programs for a plurality of ECUs 56 with a plurality of rewriting data (programs) transmitted via the mobile communication network 26. Steps of the processing sequence shown in FIG. 19, which are in common with steps of the processing sequence (FIG. 17) for rewriting programs for a plurality of ECUs 56 with a plurality of rewriting data (programs) transmitted via the satellite broadcasting network 24, will be described with reference to FIG. 17.

In step S411, the user connects the mobile phone 86 to the connector 88.

In step S412, the mobile phone 86 of the receiving device 52 establishes a communication link with the server 14. The mobile phone 86 establishes the communication link with the server 14 when the rewriting data (programs) are transmitted from the server 14. Alternatively, it is possible to request the server 14 concerning whether or not new rewriting data (programs) are available via the mobile phone 86 and the mobile communication network 26 at a given timing that is set in advance (e.g., when the mobile phone 86 is connected to the connector 88, or at a given interval after the mobile phone 86 has been connected to the connector 88, or at any other given time).

Steps S413 through S418 are identical to steps S313 through S318 of FIG. 17. These steps are followed by step S19 of FIG. 5.

### 4. Advantages of the Present Embodiment:

According to the embodiment described above, it is judged whether or not a combination of plural rewriting data (programs) is appropriate, and if the combination of plural rewriting data (programs) is appropriate, then multiple programs of the ECUs 56 are rewritten. If the combination of plural rewriting data (programs) is in error, then rewriting of the multiple programs of the ECUs 56 is canceled. Consequently, even if the programs of a plurality of ECUs 56 are rewritten altogether, the programs can be rewritten appropriately.

According to the present embodiment, in the rewriting device 54, the total number of received rewriting data (programs) and the total number of rewriting data (programs) included in the set information are compared with each other. If the compared total numbers are in agreement, then the plural programs of the ECUs 56 are rewritten in the rewriting device 54. Consequently, in the event that certain ones of the plurality of rewriting data (programs), which are transmitted to the vehicle 16, are missing, or if rewriting data (programs) that are not intended for transmission to the vehicle 16 are transmitted to the vehicle 16, rewriting of the programs can be canceled. As a result, when an error is displayed due to canceled rewriting of the programs, the user is prompted to rewrite the programs appropriately.

According to the present embodiment, each of the plural rewriting data (programs) includes an ECU ID, a program ID (version information), and compatibility information. In addition, the set information includes ECU IDs, program IDs (version information), and compatibility information of the respective rewriting data (programs). The rewriting device 54 compares the ECU ID, the program ID (version information), and the compatibility information, which are included in each of the plural rewriting data (programs), and the ECU IDs, the program IDs (version information), and the compatibility information, which are included in the set information, with each other. If the compared ECU IDs, program IDs, and compatibility information are in agreement with each other, then the rewriting device 54 rewrites the programs of the ECUs 56. Therefore, programs of the ECUs 56 can be rewritten without error.

According to the present embodiment, before the receiving device 52 sends the rewriting data (programs) to the rewriting device 54, the receiving device 52 compares with each other various information of the target ECUs 56tar and the set information. Therefore, before the receiving device 52 sends the rewriting data (programs) to the rewriting device 54, the receiving device 52 can judge whether or not the rewriting data (programs) to be transmitted are appropriate. If there is a mistake that occurs in selecting the rewriting data (programs) to be transmitted, such a mistake can be detected and can be taken care of at an early stage. Generally, the rewriting data (programs) have a large data capacity, and thus it is time-consuming to transfer rewriting data (programs) from the receiving device 52 to the rewriting device 54. However, in the above process, it is possible to judge whether or not the rewriting data (programs) are appropriate prior to the rewriting data (programs) being transferred.

According to the present embodiment, in the event that programs of a plurality of ECUs 56 that perform cooperative control are rewritten, the ECUs 56 are restarted altogether after the programs thereof have been rewritten. Therefore, malfunctioning due to the cooperative control can be avoided.

For example, in the case that programs of a plurality of ECUs 56, e.g., the ENG ECU 56a and the ABS ECU 56b, which perform cooperative control based on mutual data communications over the communication line 68, are rewritten, it is assumed that the program of the ENG ECU 56a first is rewritten, and thereafter, the program of the ABS ECU 56b is rewritten after the ECUs 56 have been restarted by turning off and on the IGSW 64. In order to prevent the other ECUs 56 from detecting a malfunction in the ENG ECU 56a due to rewriting the program of the ENG ECU 56a, the malfunction detecting function of the other ECUs 56 is stopped prior to the program of the ENG ECU 56a being rewritten. If the contents of mutual data communications in relation to cooperative control between the ENG ECU 56a and the ABS ECU 56b are changed as a result of the program of the ENG ECU 56a being rewritten, then the ENG ECU 56a and the ABS ECU 56b resume cooperative control when the ENG ECU 56a is restarted after the program thereof has been rewritten. In this case, since the program of the ENG ECU 56a is rewritten, only the ENG ECU 56a performs data communications for carrying out a new cooperative control with the ABS ECU 56b. Thus, the ENG ECU 56a or the ABS ECU 56b detects a malfunction.

According to the present embodiment, after programs of the ECUs 56 that perform cooperative control have been rewritten, the ECUs 56a are restarted altogether. Therefore, the above shortcoming can be avoided. Consequently, even if programs of a plurality of ECUs 56 are rewritten altogether, the programs can be rewritten appropriately.

According to the present embodiment, the rewriting device 54 receives set information including cooperative control information, and based on the set information, detects a setting, which indicates that a plurality of ECUs 56 the programs of which are to be rewritten (target ECUs 56tar) will perform mutual cooperative control. Therefore, it is possible to reliably detect such a setting, which is indicative of the fact that a plurality of target ECUs 56tar the programs of which are to be rewritten will perform mutual cooperative control.

### [B. Applications of the Invention]

The present invention is not limited to the above embodiment, but may adopt various arrangements based on the disclosure described above. For example, the present invention may adopt the following arrangements.

### 1. Program Rewriting System 10:

In the above embodiment, the system 10 is used in combination with vehicles. However, the system 10 is not limited to an application involving vehicles, but may be used in combination with other mobile bodies (e.g., aircrafts, ships, helicopters, etc.).

### 2. Data Transmission System 12:

In the above embodiment, rewriting data (programs) are transmitted using the CD-ROM 22, the satellite broadcasting network 24, and the mobile communication network 26. However, rewriting data (programs) may be transmitted using either one or two of the CD-ROM 22, the satellite broadcasting network 24, and the mobile communication network 26. Alternatively, rewriting data (programs) may be transmitted according to another process, for example, by way of wireless communications that do not use a broadcasting satellite or a mobile phone (for example, wireless communications by way of light beacons installed along the roadside). Another storage medium (e.g., a DVD-ROM, flash memory, or the like) may be used instead of the CD-ROM 22.

### 3. Vehicle 16:

In the above embodiment, the vehicle 16 is a gasoline-powered vehicle. However, the vehicle 16 is not limited to a gasoline-powered vehicle. Alternatively, the vehicle 16 may be a vehicle having a drive source that requires electric power when restarted, i.e., an electric vehicle (including a hybrid vehicle and a fuel battery vehicle), a diesel vehicle, or the like.

### 4. Rewriting Device 54:

In the above embodiment, the rewriting device 54 is mounted in the vehicle 16. However, the rewriting device 54 is not limited to being mounted in the vehicle 16, but alternatively, may be connected to the vehicle 16 at a position outside of the vehicle 16.

### 5. ECUs 56:

In the above embodiment, the ECUs 56 include the ENG ECU 56a, the ABS ECU 56b, the SRS ECU 56c, and the immobilizer ECU 56d. However, the number and types of ECUs 56 are not limited to the ECUs described above.

### 6. IGSW 64:

In the above embodiment, the IGSW 64 comprises a rotary switch. However, the IGSW 64 is not limited to a rotary switch, but may comprise a push switch, which successively switches from one of the positions "OFF", "ACC", and "ON" to another position when pushed, if the vehicle 16 has a so-called smart start function.

### 7. Judging When ECUs 56 are Turned Off:

In the above embodiment, the rewriting device 54 reads the position of the IGSW 64 or sends a response request to the ECUs 56. If there is no response from the ECUs 56, then the rewriting device 54 detects that the ECUs 56 are turned off. However, the rewriting device 54 is not limited to performing such a process for detecting that the ECUs 56 are turned off. The rewriting device 54 may ask the ECUs 56 for program IDs, whereby the ECUs 56 are detected as being turned off depending on whether or not a response is received from the ECUs 56. Alternatively, the rewriting device 54 may read the position of the IGSW 64, and based thereon, may consider that the ECUs 56 have been turned off a prescribed time after the position "OFF" of the IGSW 64 has been detected, or if there is no response from the ECUs 56 in response to a request sent thereto.

### 8. Set Information:

In the above embodiment, the set information includes ECU IDs, program IDs (version information), compatibility information, the total number of rewriting programs, hash values of the respective rewriting programs, and cooperative control information. However, the set information may include one or more less than all of the items described above. Other information may also be included in the set information.

In the above embodiment, the set information includes cooperative control information for identifying ECUs 56 that are performing cooperative control. However, a component of the vehicle 16 (for example, the receiving device 52, the rewriting device 54, or any one of the ECUs 56) may store the cooperative control information in advance.

### 9. Cooperative Control:

In the above embodiment, all of the ECUs 56a through 56d perform cooperative control. However, only certain ones of the ECUs 56 may perform cooperative control. Alternatively, other ECUs apart from the ECUs 56a through 56d may perform cooperative control.

## Claims

1. A vehicular program rewriting system (10) comprising:
a plurality of electronic control units (56a through 56d) each including a storage unit (106), which stores a program therein in a rewritable manner; and
a rewriting device (54) for rewriting programs of the electronic control units (56a through 56d);
wherein the rewriting device (54):
receives a plurality of rewriting data each of which includes a rewriting program, and combination appropriateness judging information by which it is judged whether or not a combination of rewriting data is appropriate;
judges whether or not the combination of rewriting data is appropriate using the combination appropriateness judging information; and
rewrites the programs of the electronic control units (56a through 56d) if the combination is judged as being appropriate.

2. The vehicular program rewriting system (10) according to claim 1, wherein the combination appropriateness judging information includes a total number of the rewriting data; and
the rewriting device (54):
compares a total number of received rewriting data and the total number of the rewriting data, which is included in the combination appropriateness judging information, with each other, and rewrites the programs of the electronic control units (56a through 56d) if the compared total numbers are in agreement with each other.

3. The vehicular program rewriting system (10) according to claim 1 or 2, wherein each of the rewriting data includes identification information of a target electronic control unit the program of which is to be rewritten, version information of the rewriting program, and compatibility information indicative of a version of a program that can be rewritten by the rewriting program;
the combination appropriateness judging information includes the identification information of the target electronic control unit, the version information, and the compatibility information, which are included in each of the rewriting data; and
the rewriting device (54):
compares the identification information of the target electronic control unit, the version information, and the compatibility information, which are included in each of the rewriting data, and the identification information of the target electronic control unit, the version information, and the compatibility information, which are included in the combination appropriateness judging information, with each other, and rewrites the programs of the electronic control units (56a through 56d) if the compared information are in agreement with each other.

4. The vehicular program rewriting system (10) according to claim 3, further comprising:
a higher-level device (52) for distributing the rewriting data and the combination appropriateness judging information to the rewriting device (54);
wherein the rewriting device (54):
receives the combination appropriateness judging information from the higher-level device (52);
requests that the target electronic control unit provide the version information of the program used thereby, based on the identification information of the target electronic control unit, which is included in the combination appropriateness judging information;
compares the version information received from the target electronic control unit and the compatibility information included in the combination appropriateness judging information with each other, and based on the result of the comparison, judges whether or not it is appropriate to rewrite the programs using the rewriting data; and
receives the rewriting data from the higher-level device (52), if the rewriting device (54) determines that it is appropriate to rewrite the programs using the rewriting data.
